# EUROPEAN PATENT APPLICATION

(11) **EP 1 705 484 A1**
(43) Date of publication of application: **27.09.2006**
(21) Application number: 05006335.3
(22) Date of filing: 23.03.2005
(51) Int. Cl.: G01N 31/22, G01N 21/78

(54) **Composition for non-toxic, non-hazardous, and environmentally friendly humidity-indicating agent and its application**

(71) Applicant: GP&E America, LLC, Jackson TN 38305 (US); GP&E Co., Ltd., Daejon 305-353 (KR)
(72) Inventor: Song, Seungwon, Dr., Jackson TN Tennessee 38305 (US); Cho, Il-Hoon, Dr., 305-353 Daejeon (KR); Kim, Jongpyo, Dr., Seo-gu 302-981 Daejeon (KR); Park, Dong-A, 550-220 Yeosu (KR)
(74) Representative: Matthews, Derek Peter

(57) **Abstract**

Cobalt chloride, copper chloride, and zinc chloride have been used as a humidity-indicating medium. European Union classified cobalt chloride as a category 2 carcinogen while repeated exposure to copper chloride can lead to copper poisoning. Zinc chloride is also known to be very harmful to the environment. These materials are very toxic to aquatic organisms and may cause long-term adverse effects in the aquatic environment. The present invention relates to composition for non-toxic, non-hazardous, and environmentally friendly humidity-indicating agent and its application to humidity indicator, specifically humidity indicator card and humidity-indicating desiccant. The present invention discloses a humidity-indicating agent comprising; pH indicator dye, colour-enhancing additive, and natural hygroscopic salt such as magnesium chloride and sodium chloride. All of the ingredients are carefully selected from non-toxic, non-hazardous, and environmentally friendly materials. The humidity-indicating agent changes colour reversibly as a function of the relative humidity.

## Description

### Technical field

The present invention relates to composition for non-toxic, non-hazardous, and environmentally friendly humidity-indicating agent comprising; pH indicator dye, colour-enhancing additive, and natural hygroscopic salt such as magnesium chloride and sodium chloride, and its application to humidity indicator, specifically humidity indicator card and humidity-indicating desiccant.

### Background art

Humidity indicator cards are an accurate method of indicating dangerous humidity conditions in a controlled atmosphere. Humidity indicator cards are often used in conjunction with a desiccant where shipping or storing various types of materials. Humidity indicator cards and humidity-indicating desiccants are used in an increasing number of applications such as electronics, semiconductors, pharmaceutical products, military components, aerospace parts, and preservation packaging products.

Cobalt chloride (molecular formula: CoCl₂; synonyms: cobalt (II) chloride, cobalt dichloride, cobalt muriate, and cobaltous chloride) has been widely used as a humidity-indicating medium since the 1940's. Humidity indicators based on cobalt chloride have been disclosed in U.S. Pat. No. 2,580,737 and U.S. Pat. No. 2,460,071.

Cobalt chloride is, however, a very toxic chemical compound and European Union classified cobalt chloride as a category 2 carcinogen (Council Directive 67/548/EEC). In the Commission Directive 2004/73/EC (April 29, 2004), cobalt chloride is listed as a chemical substance which may cause cancer by inhalation at concentration of 0.01 % or higher. The use of cobalt chloride in industrial applications requires strict control to ensure minimum exposure to environment as well as humans.

Many attempts have been made to find alternate materials to replace cobalt chloride as a humidity-indicating medium. U.S. Pat. No. 6,655,315, WO 0,109,601, and WO 0,244,712 disclose copper chloride as an alternate material. But copper chloride is not a suitable alternative as commercial humidity indicators because of potential toxicity and environmental considerations. Repeated exposure to copper chloride can lead to a serious copper poisoning (toxicology data of the Physical and Theoretical Chemistry Laboratory, Oxford University).

U.S. Pat. No. 3,898,172 and EP 1,293,773 disclose zinc chloride as an alternate humidity-indicating medium. But Zinc chloride is also very toxic to aquatic organisms and harmful to the environment. These materials may cause long-term adverse effects in the aquatic environment.

U.S. Pat. No. 6,753,184, EP 1,431,761, and EP 1,185,861 disclose iron salts as an alternate humidity-indicating media. These humidity-indicating media, however, have a colour change that is not very distinctly detectable.

The present invention therefore addresses the issue of developing an alternate humidity-indicating agent, which is non-toxic, non-hazardous, and environmentally friendly, still very distinctly detectable in colour change at different humidity level for the use of humidity indicator cards and humidity-indicating desiccants.

### Disclosure of the invention

The present invention discloses a humidity-indicating agent comprising; pH indicator dye, colour-enhancing additive, and natural hygroscopic salt such as magnesium chloride and sodium chloride. Magnesium chloride and sodium chloride are all natural ingredients from a salt mixture.

Table 1 shows the toxicity of various chemical compounds that can be used for the humidity-indicating medium. The International Labour Organization developed the risk phrases and those used in Table 1 are described in Table 3 (Chemicals Recommendation, 1990).

The definition of toxicity is described in Table 2.

**Table 1**

| **Chemical Compound** | **Formula** | **CAS No** | **EC No** | **Risk Phrases** | **Toxicity** |
|---|---|---|---|---|---|
| Cobalt Chloride | CoCl₂ | 7646-79-9 | 231-589-4 | R22, R40 R42, R43 R50, R53 | 80 mg/kg |
| Zinc Chloride | ZnCl₂ | 7646-85-7 | 231-592-0 | R22, R34 R50, R53 | 350 mg/kg |
| Copper Chloride | CuCl₂ | 7447-39-4 | 231-210-2 | R20, R21 R22, R36 R37, R38 R45 | 584 mg/kg |
| Sodium Chloride | NaCl | 7647-14-5 | 231-598-3 | R36, R37 R38 | 3000 mg/kg |
| Magnesium Chloride | MgCl₂ | 7789-30-3 | 232-094-6 | R36, R37 R38 | 8100 mg/kg |

**Table 2**

| **Term** | **Definition** |
|---|---|
| Toxicity | ORL-RAT LD50: Oral-Rat Lethal Dose 50 Percent Kill |

**Table 3**

| **Term** | **Definition** |
|---|---|
| R20 | Harmful by inhalation |
| R21 | Harmful in contact with skin |
| R22 | Harmful if swallowed |
| R25 | Toxic if swallowed |
| R34 | Cause burns |
| R36 | Irritating to eyes |
| R37 | Irritating to respiratory system |
| R38 | Irritating to skin |
| R42 | May cause sensitization by inhalation |
| R43 | May cause sensitization by skin contact |
| R45 | May cause cancer |
| R50 | Very toxic to aquatic organisms |
| R53 | May cause long-term adverse effects in the aquatic environment |

The present invention relates to composition for non-toxic, non-hazardous, and environmentally friendly humidity-indicating agent and its application to humidity indicator, specifically humidity indicator card and humidity-indicating desiccant.

The humidity-indicating agent comprises a pH indicator dye, colour-enhancing additive, and natural hygroscopic salt such as magnesium chloride and sodium chloride. All of the ingredients are carefully selected from non-toxic, non-hazardous, and environmentally friendly materials.

The humidity-indicating additive changes colour reversibly as a function of the relative humidity.

### Brief description of the drawings

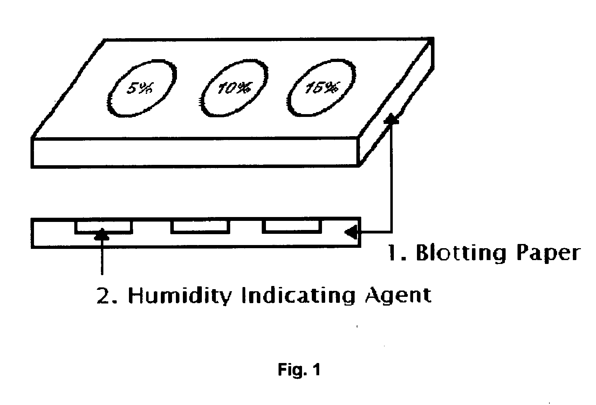

Figure 1 is a view of humidity indicator card containing humidity-indicating agent in accordance with the present invention.

### Mode(s) for carrying out the invention

### Example 1

The invention is illustrated by the following, non-limiting example.

Humidity-indicating agents containing pH indicator dye, color-enhancing additive, natural hygroscopic salt, and ethyl alcohol as a solvent were prepared as follows:

A. Neutral red 85 mg, sodium hydroxide 8 ml, MgCl₂ 25 mg, ethyl alcohol 100 ml

B. Neutral red 85 mg, sodium hydroxide 8 ml, MgCl₂ 35 mg, ethyl alcohol 100 ml

C. Neutral red 85 mg, sodium hydroxide 8 ml, MgCl₂ 45 mg, ethyl alcohol 100 ml

D. Neutral red 85 mg, sodium hydroxide 8 ml, MgCl₂ 55 mg, ethyl alcohol 100 ml

E. Neutral red 85 mg, sodium hydroxide 8 ml, MgCl₂ 65 mg, ethyl alcohol 100 ml

F. Neutral red 85 mg, sodium hydroxide 8 ml, MgCl₂ 75 mg, ethyl alcohol 100 ml

By impregnating 0.05 ml of each solution into the hydrophilic blotting paper, humidity indicator cards are obtained. The humidity-indicating agent is formed into a circular disk as shown in Fig.1. After drying humidity indicator cards in the oven at 120 °C for 24 hours, they are exposed to the different level of relative humidity at room temperature or 23 °C.

The humidity-indicating agents changed the colour from forest green to rusty brown within 1 hour at different humidity level. By varying the amount of pH indicator dye, colour-enhancing additive, and natural hygroscopic salt, the colour change can be controlled precisely so as to give the indicator greater humidity sensitivity. Table 4 shows the colour change of various solutions at different humidity level (% RH).

In Table 4 the colour changes from forest green (FG) to rusty brown (RB).

**Table 4**

| **Solution** | **0-5** | **10-15** | **20-25** | **30-35** | **40-45** | **50-55** | **60-65** |
|---|---|---|---|---|---|---|---|
| Solution A | FG | RB | RB | RB | RB | RB | RB |
| Solution B | FG | FG | RB | RB | RB | RB | RB |
| Solution C | FG | FG | FG | RB | RB | RB | RB |
| Solution D | FG | FG | FG | FG | RB | RB | RB |
| Solution E | FG | FG | FG | FG | FG | RB | RB |
| Solution F | FG | FG | FG | FG | FG | FG | RB |

### Example 2

The invention is illustrated by the following, non-limiting example.

Humidity-indicating agents containing pH indicator dye, colour-enhancing additive, natural hygroscopic salt, and ethyl alcohol as a solvent were prepared as follows:

G. Bromotymol blue 85 mg, sulfuric acid 5 ml, NaCl/MgCl₂ 35 mg, ethyl alcohol 100 ml

H. Bromotymol blue 85 mg, sulfuric acid 5 ml, NaCl/MgCl₂ 45 mg, ethyl alcohol 100 ml

I. Bromothymol blue 85 mg, sulfuric acid 5 ml, NaCl/MgCl₂ 55 mg, ethyl alcohol 100 ml

J. Bromothymol blue 85 mg, sulfuric acid 5 ml, NaCl/MgCl₂ 65 mg, ethyl alcohol 100 ml

K. Bromothymol blue 85 mg, sulfuric acid 5 ml, NaCl/MgCl₂ 75 mg, ethyl alcohol 100 ml

L. Bromothymol blue 85 mg, sulfuric acid 5 ml, NaCl/MgCl₂ 85 mg, ethyl alcohol 100 ml

By impregnating 0.05 ml of each solution into the hydrophilic blotting paper, 6 spot humidity indicator cards are obtained. The humidity-indicating agent is formed into a circular disk as shown in Fig.1. After drying humidity indicator cards in the oven at 120 °C for 24 hours, they are exposed to the different level of relative humidity at room temperature or 23 °C.

The colour of humidity-indicating agents changed the colour from red to green within 1 hour at different humidity level. By varying the amount of pH indicator dye, colour-enhancing additive, and natural hygroscopic salt, the colour change can be controlled precisely so as to give the indicator greater humidity sensitivity. Table 5 shows the colour change of various solutions at different humidity level (% RH).

In Table 5 the colour changes from rosy pink (RP) to cress green (CG).

**Table 5**

| **Solution** | **0-5** | **10-15** | **20-25** | **30-35** | **40-45** | **50-55** | **60-65** |
|---|---|---|---|---|---|---|---|
| Solution G | RP | CG | CG | CG | CG | CG | CG |
| Solution H | RP | RP | CG | CG | CG | CG | CG |
| Solution I | RP | RP | RP | CG | CG | CG | CG |
| Solution J | RP | RP | RP | RP | CG | CG | CG |
| Solution K | RP | RP | RP | RP | RP | CG | CG |
| Solution L | RP | RP | RP | RP | RP | RP | CG |

## Claims

1. A humidity-indicating agent comprising; pH indicator dye, colour-enhancing additive, and hygroscopic salt.

2. The composition of claim 1, wherein the composition further comprises a pH indicator dye selected from the group consisting of alizarin yellow, aniline blue, bromcresol green, bromothymol blue, methyl red, neutral red, thymol blue, or a combination thereof.

3. The composition of claim 1, wherein the composition further comprises a colour-enhancing additive selected from the group consisting of acetic acid, hydrochloric acid, sulfuric acid, sodium hydroxide, or a combination thereof.

4. The composition of claim 1, wherein the composition further comprises a hygroscopic salt selected from the group consisting of natural salt such as magnesium chloride, sodium chloride, silver chloride, or combination thereof.

5. The humidity-indicating agent as defined in one of claims 1 through 4, wherein said pH indicator dye is in amounts not greater than 100 times the amount of colour-enhancing additive.

6. The humidity-indicating agent as defined in one of claims 1 through 5, wherein said hygroscopic salt is in amounts not greater than 2 times the amount of pH indicator dye.

7. A method for producing a humidity indicator card comprising a support with the humidity-indicating agent as defined in one of claims 1 through 6.

8. The method according to claim 7, wherein the support comprises a material selected from the group consisting of paper labels, natural fabrics, non-woven fabrics, or a combination thereof.

9. A method for producing a humidity-indicating desiccant comprising a desiccant that is impregnated with the humidity-indicating agent as defined in one of claims 1 through 6.

10. The method according to claim 9, wherein the desiccant comprises a material selected from the group consisting of clays, silica gels, molecular sieves, activated carbons, or a combination thereof.
